# EUROPEAN PATENT APPLICATION

(11) **EP 4 475 318 A1**
(43) Date of publication of application: **11.12.2024**
(21) Application number: 24750465.7
(22) Date of filing: 19.01.2024
(51) Int. Cl.: H01M 50/403, H01M 50/446, H01M 50/457, H01M 50/46

(54) **METHOD FOR MANUFACTURING ELECTRODE-INTEGRATED SEPARATOR FOR LITHIUM SECONDARY BATTERY**

(30) Priority: 01.02.2023 KR 20230013551
(71) Applicant: LG Chem, Ltd., Yeongdeungpo-gu Seoul 07336 (KR)
(72) Inventor: KOO, Beom Mo, Daejeon 34122 (KR); PARK, Youngjin, Daejeon 34122 (KR); LEE, Seung Heon, Daejeon 34122 (KR); KIM, Daeho, Daejeon 34122 (KR)
(74) Representative: Plasseraud IP
(86) International application number: PCT/KR2024/000934
(87) International publication number: WO 2024/162663

(57) **Abstract**

The present disclosure relates to a method for manufacturing an electrode-integrated separator for a lithium secondary battery. According to the present disclosure, a manufacturing method that enables more efficient mass production of an electrode-integrated separator while minimizing the occurrence of defects is provided.

## Description

### [TECHNICAL FIELD]

### CROSS-REFERENCE TO RELATED APPLICATION(S)

This application claims the benefit of Korean Patent Application No. 10-2023-0013551 filed on February 1, 2023 in the Korean Intellectual Property Office, the disclosure of which is incorporated herein by reference in its entirety.

The present disclosure relates to a method for manufacturing an electrode-integrated separator for a lithium secondary battery.

### [BACKGROUND OF ART]

With the trends toward increasing the functionality of mobile phones, laptop computers, tablet computers, mobile batteries, electric vehicles, personal mobility devices, and the like, the demand for a secondary battery serving as a driving power source thereof is steadily increasing. Particularly, lithium secondary batteries, which have high operating voltage and high energy density per unit weight, are most frequently used at present.

A lithium secondary battery generally has a structure in which an electrode assembly having a positive electrode/separator/negative electrode structure, which can be charged and discharged, is mounted in a battery case. Each of the positive electrode and the negative electrode is manufactured by applying a slurry including an electrode active material or the like to one surface or both surfaces of a metal current collector, drying the slurry, and rolling the metal current collector having the dried slurry applied thereto.

The separator is one of the most important factors that affect the lifespan of a secondary battery. It is necessary for the separator to exhibit ion permeability and mechanical strength such that an electrolytic solution can pass smoothly through the separator. As the applications of high-energy lithium secondary batteries are expanded, safety of the separator at high temperature is also needed.

Conventionally, a separator including a substrate and an inorganic coating layer has a problem in that the force of adhesion between the separator and an electrode is not sufficient due to its material characteristics, whereby the separator and the electrode are locally separated from each other or wrinkles are formed at the interface between the separator and the electrode. Polyolefin commonly used as the substrate has a problem with thermal stability, such as being melted at a high temperature.

In order to solve these problems, a method of constructing a separator by using only an inorganic coating film without the substrate has been proposed. However, such a separator still does not have sufficient adhesive force with electrodes and has significantly low insulating characteristics, whereby the separator is vulnerable to an internal short circuit when applying to an electrochemical device. Such a separator is easily torn due to the low tensile force and low elongation thereof. As a result, there is a fatal drawback in that a micro-scale short circuit occurs in an electrode assembly. In addition, depending on the condition of the electrode (e.g., porosity and surface roughness, etc.), non-uniformity of the separator coating properties and defects resulting therefrom may appear.

Due to the low mechanical properties of the separator and the difficulty in defect management, it has been difficult to mass-manufacture the electrode-integrated separator.

### [DETAILED DESCRIPTION OF THE INVENTION]

### [Technical Problem]

It is an object of the present disclosure to provide a manufacturing method that enables more efficient mass production of an electrode-integrated separator while minimizing the occurrence of defects.

### [Technical Solution]

According to an embodiment of the present disclosure, there is provided a method for manufacturing an electrode-integrated separator for a lithium secondary battery, the method comprising the steps of:
providing a carrier film 100 having a release layer 102 formed thereon;
forming a laminate pattern 150 including a porous layer pattern 104 and an adhesive layer pattern 106 which are sequentially stacked on the release layer 102 of the carrier film 100;
forming an electrode active material layer pattern 203 on a metal substrate 200 for an electrode current collector;
laminating the carrier film 100 and the metal substrate 200 for an electrode current collector so that the adhesive layer pattern 106 and the electrode active material layer pattern 203 come into contact with each other; and
transferring the porous layer pattern 104 and the adhesive layer pattern 106 onto the electrode active material layer pattern 203, and removing the carrier film 100 having the release layer 102 formed thereon.

Now, a method for manufacturing an electrode-integrated separator for a lithium secondary battery according to an embodiment of the disclosure will be described in more detail.

Terms or words used in the present specification and claims should not be construed as limited to ordinary or dictionary terms, and the present invention should be construed with meanings and concepts that are consistent with the technical idea of the present disclosure based on the principle that the inventors may appropriately define concepts of the terms to appropriately describe their own invention in the best way.

Unless defined otherwise, all technical and scientific terms used herein have the same meaning as commonly understood by one of ordinary skill in the art to which this invention belongs. The terms used herein are for the purpose of describing specific embodiments only and is not intended to limit the scope of the invention.

The singular forms "a," "an" and "the" used herein are intended to include plural forms, unless the context clearly indicates otherwise.

It should be understood that the terms "comprise," "include", "have", etc. are used herein to specify the presence of stated feature, region, integer, step, action, element and/or component, but do not preclude the presence or addition of other feature, region, integer, step, action, element, component and/or group.

While the present invention can be modified in various ways and take on various alternative forms, specific embodiments thereof are illustrated and described in detail below. However, it should be understood that there is no intent to limit the present invention to the particular forms disclosed, but on the contrary, the present invention covers all modifications, equivalents, and alternatives falling within the spirit and scope of the present invention.

In describing a position relationship, for example, when the position relationship is described as 'upon~', 'above~', 'below~', and 'next to-', one or more other portions may be arranged between two portions unless `just' or 'direct' is used.

In describing a time relationship, for example, when the temporal order is described as 'after~', 'subsequent~', 'next~', and 'before~', a case which is not continuous may be included unless `just' or 'direct' is used.

As used herein, the term 'at least one' should be understood to include any and all combinations of one or more of the associated listed items.

In the present disclosure, any one layer being coupled to another layer "through" the other layer means that the one layer and the another layer are stacked and coupled by the other layer interposed in at least a partial region between the one layer and the another layer.

As explained in the Background Art of the invention, since a separator made only of an inorganic coating film has low mechanical properties, there is a limitation in that it cannot be manufactured in the form of a free-standing thin film.

Due to such limitations, a method for manufacturing an electrode-integrated separator by coating an inorganic coating composition onto an electrode has been proposed. However, in this method, non-uniformity in separator coating properties and defects resulting therefrom may appear depending on the condition of the electrode (e.g., porosity and surface roughness, etc.). In addition, the method has low productivity, which makes it difficult to mass-manufacture an electrode-integrated separator.

As a result of continuous research conducted by the present inventors, it has been confirmed that it is possible to mass-manufacture the electrode-integrated separator more efficiently while minimizing the occurrence of defects by the following manufacturing method.

According to one embodiment of the disclosure, there is provided a method for manufacturing an electrode-integrated separator for a lithium secondary battery, the method comprising the steps of:
providing a carrier film 100 having a release layer 102 formed thereon;
forming a laminate pattern 150 including a porous layer pattern 104 and an adhesive layer pattern 106 which are sequentially stacked on the release layer 102 of the carrier film 100;
forming an electrode active material layer pattern 203 on a metal substrate 200 for an electrode current collector;
laminating the carrier film 100 and the metal substrate 200 for an electrode current collector so that the adhesive layer pattern 106 and the electrode active material layer pattern 203 come into contact with each other; and
transferring the porous layer pattern 104 and the adhesive layer pattern 106 onto the electrode active material layer pattern 203, and removing the carrier film 100 having the release layer 102 formed thereon.

The manufacturing method facilitates mass production by stacking the individual layers constituting the electrode-integrated separator into a pattern. In one example, the porous layer pattern means that porous layer units having an arbitrary shape are continuously arranged at regular intervals. The adhesive layer pattern is sequentially stacked on the porous layer pattern. Through the process of forming patterns of individual layers in this manner, a plurality of electrode-integrated separators can be finally provided.

In particular, as the porous layer pattern is stacked and transferred onto the electrode active material layer pattern using the carrier film, the occurrence of defects such as breaks, tears, and wrinkles can be minimized during the manufacturing process.

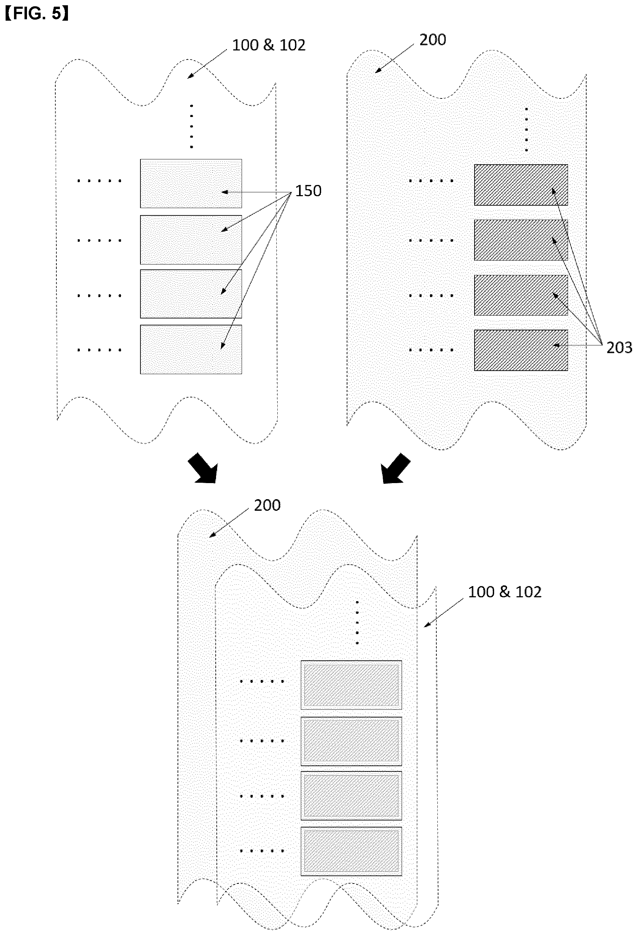

FIG. 5 is a plan view schematically showing some steps included in the method for manufacturing an electrode-integrated separator for a lithium secondary battery according to an embodiment of the present disclosure.

Referring to FIG. 5, the manufacturing method may be performed by a method of preparing a carrier film 100 having the laminate pattern 150 formed thereon and a metal substrate 200 for an electrode current collector having the electrode active material layer pattern 203 formed thereon, respectively, laminating the carrier film 100 and the metal substrate 200 for an electrode current collector, and removing the carrier film 100 therefrom. Here, the structure of each layer, the lamination method, and the like are specified in the following description.

According to one embodiment, a step of providing a carrier film 100 having a release layer 102 formed thereon; and a step of forming a laminate pattern 150 including a porous layer pattern 104 and an adhesive layer pattern 106 which are sequentially stacked on the release layer 102 of the carrier film 100 are performed.

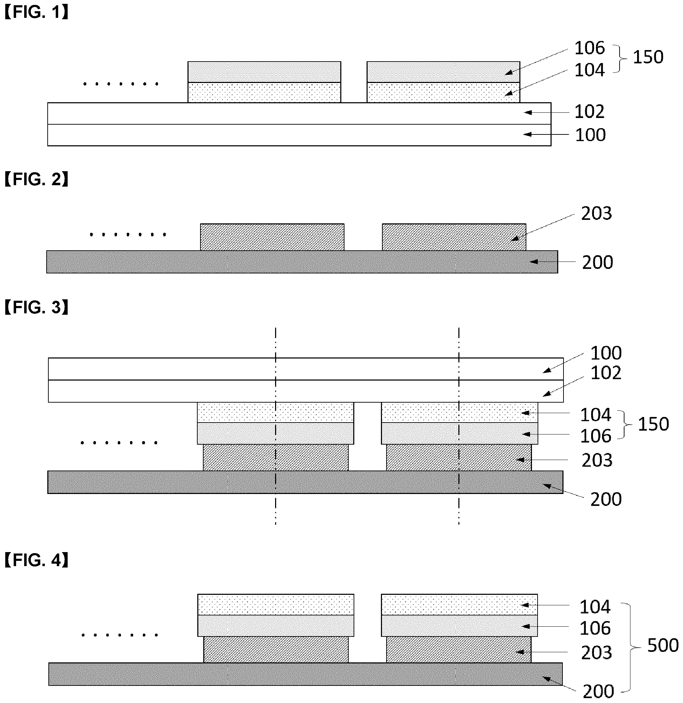

FIG. 1 is a cross-sectional view showing a state in which a laminate pattern 150 including a porous layer pattern 104 and an adhesive layer pattern 106 are formed on the carrier film 100 having the release layer 102 formed thereon.

As the carrier film 100, a transparent polymer substrate commonly used in the field of a lithium secondary battery may be applied. In one example, the carrier film 100 may be a transparent film made of at least one polymer material selected from the group consisting of high-density polyethylene, low-density polyethylene, linear low-density polyethylene, ultrahigh molecular weight polyethylene, polypropylene, polybutylene, polypentene, polyethylene terephthalate, polybutylene terephthalate, polyacetal, polyamide, polycarbonate, polyimide, polyetheretherketone, polyethersulfone, polyphenylene oxide, polyphenylene sulfide, and polyethylenenaphthalene. The thickness of the carrier film 100 is not particularly limited, and can be adjusted within a normal range in consideration of the efficiency of the manufacturing process.

As the carrier film 100, one on which a release layer 102 is formed is applied. The release layer 102 may be formed on one surface or both surfaces of the carrier film 100.

The release layer 102 may be formed on the entire surface of the carrier film 100. Alternatively, the release layer 102 may form a pattern in which two or more release layer units having arbitrary shapes and sizes are continuously arranged at regular intervals on one surface of the carrier film 100.

A silicone-based release coating composition containing a silicone resin, a silicone-based curing agent, and a thermal initiator may be used to form the release layer 102. Alternatively, a UV-curable coating composition containing a reactive compound such as urethane acrylate, epoxy acrylate, polyester acrylate, and polyether acrylate may be used in the forming of the release layer 102.

The release layer 102 is removed together with the carrier film 100 in the final step. Therefore, the release layer 102 needs to have a surface energy capable of exhibiting an appropriate level of mold releasability. Preferably, the surface energy of the release layer 102 may be 15 dyn/cm to 30 dyn/cm, or 15 dyn/cm to 25 dyn/cm, or 16 dyn/cm to 25 dyn/cm, or 16 dyn/cm to 20 dyn/cm.

The thickness of the release layer 102 may be determined in the range of 1 *µ*m to 200 *µ*m, or 2 ,um to 100 *µ*m, or 2 *µ*m to 50 *µ*m, or 2 *µ*m to 5 *µ*m in order to exhibit appropriate mold releasability.

A porous layer pattern 104 and an adhesive layer pattern 106 are sequentially stacked on the release layer 102 of the carrier film 100 to form a laminate pattern 150.

The porous layer pattern 104 is formed in such a manner that two or more porous layer units having an arbitrary shape and size are continuously arranged at regular intervals on the release layer 102. And, the adhesive layer pattern 106 is formed by continuously arranging adhesive layer units on the porous layer units with the same shape, size, and spacing as the porous layer units.

The porous layer pattern 104 and the adhesive layer pattern 106 may be formed by methods such as coating, dispensing, transferring, printing, dipping, and spraying, respectively. In one example, the porous layer pattern 104 and the adhesive layer pattern 106 may be formed by using devices such as a comma coater, a gravure printer, a micro gravure printer, and an offset printer, respectively.

The porous layer pattern 104 includes a polymer binder and inorganic fine particles dispersed in the polymer binder.

The polymer binder may be characterized in that it is gelled when swelled with a liquid electrolyte, and thus shows a high degree of swelling. The electrolyte injected after the assemblage of a lithium secondary battery infiltrates into the polymer, and the polymer containing the electrolyte infiltrated into the same also has electrolyte ion conductivity. Therefore, a polymer having a solubility parameter of 15 to 45 MPa^{1/2} may be preferably used as the polymer binder.

In one example, the polymer binder may be at least one compound selected from the group consisting of polyvinylidene fluoride, poly(vinylidene fluoride-hexafluoropropylene), poly(vinylidene fluoride-trichloroethylene), poly(vinylidene fluoride-chlorotrifluoroethylene), polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene butadiene rubber, fluororubber, and polyimide.

The inorganic fine particles form micropores due to gaps between particles, maintain their physical form at high temperatures, and are electrochemically stable. It is preferable that the inorganic fine particles do not undergo oxidation and/or reduction reactions in the operating voltage range of the secondary battery (e.g., 0 to 5V based on Li/Li+). The inorganic fine particles preferably have a high electrolyte ion transport ability. It is preferable that the inorganic fine particles have a density as low as possible so that they can be well dispersed within the polymer binder. In addition, the inorganic fine particles preferably have a high dielectric constant so as to contribute to increasing the degree of dissociation of the electrolyte salt in the electrolyte.

Preferably, the inorganic fine particles may be at least one selected from the group consisting of inorganic particles having a dielectric constant of 1 or more, inorganic particles having piezoelectricity, and inorganic particles having lithium ion transport ability.

In one example, inorganic particles such as SrTiOs, SnO₂, CeO₂, MgO, NiO, CaO, ZnO, ZrO₂, Y₂O₃, Al₂O₃, boehmite(AlO(OH)), Al(OH)₃, TiO₂, and SiC have a dielectric constant of 1 or more, and can be preferably applied as the inorganic fine particles.

In another example, the inorganic particles having piezoelectricity are a material that is nonconductive at normal pressure, or exhibits electric conductivity due to internal structure change when a certain pressure is applied. The piezoelectric inorganic particles have high dielectric constant characteristics with a dielectric constant of 100 or more. In addition, when a certain pressure is applied to the piezoelectric inorganic particles to pull or compress them, an electric charge is generated so that one side is positively(+) charged and the other side is negatively(-) charged, thereby generating a potential difference between the two sides. Due to the above characteristics that the piezoelectric inorganic particles have, when an internal short circuit occurs in the electrode of a secondary battery due to an external impact, it is possible to prevent direct contact between the positive electrode and the negative electrode, thereby gradually reducing the voltage and improving safety. As the piezoelectric inorganic particles, inorganic particles such as BaTiO₃, Pb(Zr,Ti)O₃ (PZT), Pb₁₋ₓLaₓZr_{1-y}Ti_{y}O₃ (PLZT), Pb(Mg_{1/3}Nb_{2/3})O₃-PbTiO₃ (PMN-PT), and HfO₂ may be preferably applied.

In another example, the inorganic particle having the ability to transport lithium ions refers to an inorganic particle that contains lithium element but has the function of moving lithium ions without storing lithium. The inorganic particles having the ability to transport lithium ions enable improvement of lithium ion conductivity within the battery. Examples of such inorganic particles include inorganic particles such as Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

Preferably, the inorganic fine particles may be at least one selected from the group consisting of SrTiOs, SnO₂, CeO₂, MgO, NiO, CaO, ZnO, ZrO₂, Y₂O₃, Al₂O₃, boehmite(AlO(OH)), Al(OH)₃, TiO₂, SiC, BaTiO₃, Pb(Zr,Ti)O₃, Pbᵢ₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

The inorganic fine particles preferably have a particle size of 0.001 *µ*m to 10 *µ*m. In order to ensure dispersibility in the porous layer pattern 104, the inorganic fine particles preferably have a particle size of 0.001 *µ*m or more. However, if the particle size of the inorganic fine particles is too large, the thickness of the porous layer pattern 104 increases, thereby reducing mechanical properties, and internal short circuits may occur during charging and discharging of a lithium secondary battery due too large pore size. Therefore, the inorganic fine particles preferably have a particle size of 10 *µ*m or less.

According to one embodiment, the porous layer pattern 104 may include 10 to 99% by weight of the inorganic fine particles and 1 to 90% by weight of the polymer binder. In order to impart the porous layer pattern 104 with appropriate porosity and insulation, the inorganic fine particles are preferably contained in an amount of 10% by weight or more. However, if the inorganic fine particles are included in an excessive amount, the adhesive force may be weakened and thus the mechanical properties of the porous layer pattern 104 may be deteriorated. Therefore, the inorganic fine particles are preferably contained in an amount of 99% by weight or less.

According to one embodiment, the porous layer pattern 104 preferably has a porosity in a range suitable for exhibiting the characteristics of the porous layer. If the porosity of the porous layer is too large, an internal short circuit may occur during charging and discharging of the lithium secondary battery. Therefore, the porosity of the porous layer pattern 104 is preferably 60% or less.

The thickness of the porous layer pattern 104 is preferably adjusted in the range of 5 *µ*m to 100 *µ*m, or 5 *µ*m to 50 *µ*m, or 10 *µ*m to 50 *µ*m in order to exhibit appropriate separator performance.

The material of the adhesive layer pattern 106 is preferably electrochemically stable and also has adhesive properties suitable for bonding the porous layer pattern 104 and the electrode active material layer pattern 203.

Preferably, the adhesive layer pattern 106 may include at least one compound selected from the group consisting of polyvinylidene fluoride, poly(vinylidene fluoride-hexafluoropropylene), poly(vinylidene fluoride-trichloroethylene), poly(vinylidene fluoride-chlorotrifluoroethylene), polymethyl methacrylate, polyacrylonitrile, polyvinylpyrrolidone, polyvinylacetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethylcellulose, acrylonitrile-styrene-butadiene copolymer, ethylene-propylene-diene terpolymer, sulfonated ethylene-propylene-diene terpolymer, styrene butadiene rubber, fluororubber, and polyimide.

The thickness of the adhesive layer pattern 106 is preferably adjusted within the range of 1 *µ*m to 50 *µ*m, or 1 *µ*m to 25 *µ*m, or 2 *µ*m to 25 *µ*m in order to exhibit appropriate adhesive properties.

According to one embodiment, the carrier film 100 having the release layer 102 formed thereon and the laminate pattern 150 are preferably transparent or translucent, respectively. Here, being transparent or translucent means that light can pass through the carrier film 100 having the release layer 102 formed thereon and the laminate pattern 150 without being optically scattered.

Thereby, when the carrier film 100 having the laminate pattern 150 formed thereon is overlapped on the metal substrate 200 for an electrode current collector having the electrode active material layer pattern 203 formed thereon, the position of the electrode active material layer pattern 203 can be confirmed through the carrier film 100 having the release layer 102 formed thereon and the laminate pattern 150. This will be explained in more detail in the lamination process described hereinafter.

The transparency of the carrier film 100 having the release layer 102 formed thereon and the laminate pattern 150 is not particularly numerically limited. It is sufficient to have the transparency to the extent that the position of the electrode active material layer pattern 203 can be confirmed through the carrier film 100 and the laminate pattern 150.

Preferably, the carrier film 100 having the release layer 102 formed thereon and the laminate pattern 150 may have a light transmittance of 40% or more, or 40% to 80%, or 40% to 60%, or 45% to 55% to visible light with a wavelength of 550 nm, respectively.

Considering the transparency of the carrier film 100 having the release layer 102 formed thereon and the laminate pattern 150, the carrier film 100 having the release layer 102 formed thereon, the porous layer pattern 104, and the adhesive layer pattern 106 preferably have materials and thicknesses selected from the above-mentioned ranges, respectively.

According to one embodiment, a step of forming the electrode active material layer pattern 203 on the metal substrate 200 for an electrode current collector is performed.

FIG. 2 is a cross-sectional view of a state in which the electrode active material layer pattern 203 is formed on the metal substrate 200 for an electrode current collector.

As the metal substrate 200 for the electrode current collector, a material known to be electrically conductive without causing chemical changes in the lithium secondary battery can be used. In one example, the metal substrate 200 for an electrode current collector includes stainless steel; aluminum; copper; nickel; titanium; fired carbon; or aluminum or stainless steel that is surface-treated with one of carbon, nickel, titanium, silver, or the like may be used.

The metal substrate 200 for an electrode current collector may have a thickness of 3 *µ*m to 500 *µ*m. In order to increase adhesive force with the electrode active material layer pattern 203, the metal substrate 200 for an electrode current collector may have fine irregularities formed on its surface.

An electrode active material layer pattern 203 is formed on the metal substrate 200 for an electrode current collector.

The electrode active material layer pattern 203 is formed in such a manner that two or more electrode active material layer units of arbitrary shape and size are continuously arranged at regular intervals on the metal substrate 200 for an electrode current collector.

It is preferable that the electrode active material layer unit has the same shape and smaller size compared to the above-mentioned porous layer units from the viewpoint of ensuring battery safety. In one example, as shown in FIGS. 3 and 5, it is preferable that the electrode active material layer pattern 203 has the same shape as the laminate pattern 150, and also has a size that the electrode active material layer pattern 203 can be covered by the laminate pattern 150.

The electrode active material layer pattern 203 may be formed by methods such as coating, dispensing, transferring, printing, dipping, spraying, vapor depositing, or the like. In one example, the electrode active material layer pattern 203 may be formed by a patch coating method in which patch-type electrode active material layer units are arranged at regular intervals.

The electrode active material layer pattern 203 includes an electrode material that is a mixture of an electrode active material, a conductive material, and a binder. The electrode active material layer pattern 203 may have a thickness of 10 ,um to 500 *µ*m.

The conductive material may be used to impart the electrode with electronic conductivity. The conductive material may be used without particular limitation as long as it has electronic conductivity without causing chemical changes in a lithium secondary battery. By way of non-limiting example, the conductive material may be carbon based materials such as carbon black, acetylene black, Ketjen black, channel black, furnace black, lamp black, thermal black, and carbon fibers; graphite such as natural graphite and artificial graphite; metal powders or metal fibers such as copper, nickel, aluminum, and silver; conductive whiskers such as zinc oxide whiskers and potassium titanate whiskers; conductive metal oxides such as titanium oxide; or conductive polymers such as polyphenylene derivatives.

The content of the conductive material can be adjusted within a range that does not cause a decrease in capacity of the lithium secondary battery while exhibiting an appropriate level of electric conductivity. Preferably, the content of the conductive material may be 1% to 10% by weight or 1% to 5% by weight based on the total weight of the electrode material.

The binder is used to properly adhere the electrode material to the electrode current collector. In one example, the binder may be polyvinyl alcohol, polyacrylate, carboxylmethyl cellulose, hydroxypropyl cellulose, diacetylcellulose, polyvinyl chloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like.

The content of the binder can be adjusted within a range that does not cause a decrease in capacity of the lithium secondary battery while exhibiting an appropriate level of adhesiveness. Preferably, the content of the binder may be 1% to 10% by weight or 1% to 5% by weight based on the total weight of the electrode material.

When the electrode active material layer pattern 203 forms a positive electrode part, the electrode active material can be used without particular limitation as long as it is a material capable of reversibly intercalating and deintercalating lithium ions.

In one example, the positive electrode active material may be a composite oxide or phosphate containing cobalt, manganese, nickel, iron, or a combination of lithium and these metals.

In another example, the positive electrode active material may be a compound represented by any one of the following chemical formulas: LiₐA_{1-b}R_{b}D₂ (0.90≤a≤1.8, 0≤b≤0.5); LiₐE_{1-b}R_{b}O_{2-c}D_{c} (0.90≤a≤1.8, 0≤b≤0.5, 0≤c≤0.05); LiE_{2-b}R_{b}O_{4-c}D_{c} (0≤b≤0.5, 0≤c≤0.05); LiₐNi_{1-b-c}Co_{b}R_{c}D_{d} (0.90≤a≤1.8, 0≤b≤0.5, 0≤c≤0.05, 0<d≤2); LiₐNi_{1-b-c}Co_{b}R_{c}O_{2-d}Z_{d} (0.90≤a≤1.8, 0≤b≤0.5, 0≤c≤0.05, 0<d<2); LiₐNi_{1-b-c}Co_{b}R_{c}O_{2-d}Z₂ (0.90≤a≤1.8, 0≤b≤0.5, 0≤c≤0.05, 0<d<2); LiₐNi_{1-b-c}Mn_{b}R_{c}D_{d} (0.90≤a≤1.8, 0≤b≤0.5, 0≤c≤0.05, 0<d≤2); LiₐNi_{1-b-c}Mn_{1b}R_{c}O_{2-d}Z_{d} (0.90≤a≤1.8, 0≤b≤0.5, 0≤c≤0.05, 0<d<2); LiₐNi_{1-b-c}Mn_{b}R_{c}O_{2-d}Z₂ (0.90≤a≤1.8, 0≤b≤0.5, 0≤c≤0.05, 0<d<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}Mn_{d}G_{c}O₂ (0.90≤a≤1.8, 0≤b≤0.9, 0≤c≤0.5, 0≤d≤0.5, 0.001≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiTO₂; LiNiVO₄; Li_{(3-f)}J₂(PO₄)₃ (0≤f≤2); Li_{(3-f)}Fe₂(PO₄)₃ (0≤f≤2); and LiFePO₄.

In the above chemical formulas, A is Ni, Co, Mn or a combination thereof; R is Al, Ni, Co, Mn, Cr, Fe, Mg, Sr, V, a rare earth element or a combination thereof; D is O, F, S, P or a combination thereof; E is Co, Mn or a combination thereof; Z is F, S, P or a combination thereof; G is Al, Cr, Mn, Fe, Mg, La, Ce, Sr, V or combinations thereof; Q is Ti, Mo, Mn or a combination thereof; T is Cr, V, Fe, Sc, Y or a combination thereof; and J is V, Cr, Mn, Co, Ni, Cu or combinations thereof.

Those having a coating layer on the surface of the positive electrode active material can be used, or a mixture of the positive electrode active material and a positive electrode active material having a coating layer can be used. As the coating element included in the coating layer, Mg, Al, Co, K, Na, Ca, Si, Ti, V, Sn, Ge, Ga, B, As, Zr, or a mixture thereof can be used.

According to one embodiment, the positive electrode active material may be contained in an amount of 80% to 95% by weight based on the total weight of the positive electrode material. Preferably, the content of the positive electrode active material may be 82% by weight to 95% by weight, or 82% by weight to 93% by weight, or 85% by weight to 93% by weight, or 85% by weight to 90% by weight, based on the total weight of the positive electrode material.

When the electrode active material layer pattern 203 forms a negative electrode part, the electrode active material may include a material capable of reversibly intercalating and deintercalating lithium ions, a lithium metal, a lithium metal alloy, a material capable of doping and dedoping lithium, and a transition metal oxide.

As the material capable of reversibly intercalating and de-intercalating lithium ions, crystalline carbon, amorphous carbon, or a mixture thereof may be exemplified as a carbonaceous material. Specifically, the carbonaceous material may be natural graphite, artificial graphite, Kish graphite, pyrolytic carbon, mesophase pitches, mesophase pitch-based carbon fiber, meso-carbon microbeads, petroleum or coal tar pitch derived cokes, soft carbon, hard carbon, and the like.

The lithium metal alloy may include an alloy of lithium and a metal selected from the group consisting of Na, K, Rb, Cs, Fr, Be, Mg, Ca, Sr, Si, Sb, Pb, In, Zn, Ba, Ra, Ge, Al, Sn, Bi, Ga, and Cd.

The material capable of doping and dedoping lithium may include Si, a Si-C composite, SiOₓ (0<x<2), a Si-Q alloy (wherein Q is an element selected from the group consisting of alkali metals, alkali earth metals, group 13 elements, group 14 elements, group 15 elements, group 16 elements, transition metals, rare earth elements, and a combination thereof, but is not Si), Sn, SnO₂, Sn-R (wherein R is an element selected from the group consisting of alkali metals, alkali earth metals, group 13 elements, group 14 elements, group 15 elements, group 16 elements, transition metals, rare earth elements, and a combination thereof, but is not Sn), and the like. In addition, as the material capable of doping and dedoping lithium, at least one of the above examples can also be mixed with SiO₂ and then used. The Q and R may be Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and the like.

And, the transition metal oxide may include vanadium oxide, lithium vanadium oxide, lithium titanium oxide, and the like.

Preferably, the negative electrode active material may include one or more compounds selected from the group consisting of a carbonaceous material and a silicon compound. Here, the carbonaceous material is a material containing at least one selected from the group consisting of natural graphite, artificial graphite, Kish graphite, pyrolytic carbon, mesophase pitches, mesophase pitch-based carbon fiber, meso-carbon microbeads, petroleum or coal tar pitch derived cokes, soft carbon, and hard carbon, as previously exemplified. In addition, the silicon compound may be a compound containing Si previously exemplified, that is, Si, a Si-C composite, SiOx (wherein 0<x<2), the Si-Q alloy, mixtures thereof, or a mixture of at least one thereof and SiO₂.

According to one embodiment, the negative electrode active material may be contained in an amount of 85% by weight to 98% by weight based on the total weight of the negative electrode material. Preferably, the content of the negative electrode active material may be 85% by weight to 97% by weight, or 87% by weight to 97% by weight, or 87% by weight to 95% by weight, or 90% by weight to 95% by weight based on the total weight of the negative electrode material.

According to one embodiment, a step of laminating the carrier film 100 and the metal substrate 200 for an electrode current collector so that the adhesive layer pattern 106 and the electrode active material layer pattern 203 come into contact with each other is performed.

Referring to FIGS. 3 and 5, the carrier film 100 and the metal substrate 200 for an electrode current collector are laminated so that the adhesive layer pattern 106 and the electrode active material layer pattern 203 come into contact with each other.

In order to ensure the efficiency of the laminating step, the carrier film 100 having the release layer 102 formed thereon and the laminate pattern 150 are preferably transparent or translucent, respectively. Here, being transparent or translucent means that light can pass through the carrier film 100 having the release layer 102 formed thereon and the laminate pattern 150 without being optically scattered. Thereby, when the carrier film 100 having the laminate pattern 150 formed thereon is overlapped on the metal substrate 200 for an electrode current collector having the electrode active material layer pattern 203 formed thereon, the position of the electrode active material layer pattern 203 can be confirmed through the carrier film 100 having the release layer 102 formed thereon and the laminate pattern 150.

According to one embodiment, the laminating step may be performed in a manner that laminates a carrier film 100 in which two or more laminate patterns 150 including a porous layer pattern 104 and an adhesive layer pattern 106 are formed on the release layer 102; and a metal substrate 200 for an electrode current collector having two or more electrode active material layer patterns 203 formed thereon, under a condition where the center of the adhesive layer unit forming the adhesive layer pattern 106 and the center of the electrode active material layer unit forming the electrode active material layer pattern 203 coincide with each other.

In one example, the laminating step may be performed by using an alignment laminating device. Referring to FIG. 3, the laminating step may be performed in a manner that laminates after adjusting the positions of the carrier film 100 and the metal substrate 200 for an electrode current collector to a position where the center of each adhesive layer unit coincides with the center of each electrode active material layer unit using an alignment laminating device. At this time, the alignment means of the alignment laminating device can confirm the position of the electrode active material layer pattern 203 through the carrier film 100 having the release layer 102 formed thereon and the laminate pattern 150.

If necessary, before the laminating step, a step of confirming the lamination position of the electrode active material layer pattern 203 that is visually confirmed through the carrier film 100 having the release layer 102 formed thereon and the laminate pattern 150 may be further performed.

Subsequently, a step of transferring the porous layer pattern 104 and the adhesive layer pattern 106 onto the electrode active material layer pattern 203, and removing the carrier film 100 having the release layer 102 formed thereon is performed.

The step of transferring the porous layer pattern 104 and the adhesive layer pattern 106 onto the electrode active material layer pattern 203 may be performed under heating and pressing. In one example, by applying heat and pressure under a condition in which the carrier film 100 and the metal substrate 200 for an electrode current collector are laminated as shown in FIG.3, the porous layer pattern 104 is transferred onto the electrode active material layer pattern 203 via the adhesive layer pattern 106. Preferably, the transferring step may be performed at a temperature of 80°C to 110°C and a pressure of 10 kgf to 30 kgf.

FIG. 4 is a cross-sectional view of the state in which the release layer 102 and the carrier film 100 are removed from the state of FIG. 3.

As described previously, in order to enable the release layer 102 to exhibit an appropriate level of mold release properties, the release layer 102 preferably has a surface energy of 15 dyn/cm to 30 dyn/cm, or 15 dyn/cm to 25 dyn/cm, or 16 dyn/cm to 25 dyn/cm, or 16 dyn/cm to 20 dyn/cm.

By removing the release layer 102 and the carrier film 100, an electrode-integrated separator 500 for a lithium secondary battery is obtained in which an electrode active material layer pattern 203, an adhesive layer pattern 106, and a porous layer pattern 104 are sequentially formed on a metal substrate 200 for an electrode current collector.

According to another embodiment of the present disclosure, a lithium secondary battery comprising an electrode-integrated separator 500 for a lithium secondary battery is provided.

The lithium secondary battery may include an electrode assembly including a counter electrode disposed on the porous layer pattern 104 of the electrode-integrated separator 500 for a lithium secondary battery; an electrolyte impregnated in the electrode assembly; and a battery case that seals and houses the electrode assembly and the electrolyte.

The lithium secondary battery can exhibit excellent durability and stable performance by including the above-mentioned electrode assembly. The lithium secondary battery may have various shapes such as prismatic, cylindrical, and pouch-shapes.

The lithium secondary battery may be used as energy sources with improved performance and safety in the field of portable electronic devices such as mobile phones, laptop computers, tablet computers, mobile batteries, and digital cameras; and in the field of transportation means such as electric vehicles, electric bikes, and personal mobility devices.

According to one embodiment, the electrolyte can be used without particular limitation as long as it is known to be applicable to lithium ion secondary batteries in the technical field to which the present invention pertains. For example, the electrolyte may be an organic liquid electrolyte, an inorganic liquid electrolyte, a solid polymer electrolyte, a gel-type polymer electrolyte, a solid inorganic electrolyte, a molten inorganic electrolyte, or the like.

Specifically, the electrolyte may include a non-aqueous organic solvent and a lithium salt.

The non-aqueous organic solvent can be used without particular limitation as long as it can serve as a medium through which ions involved in the electrochemical reaction of the battery can move.

Specifically, the non-aqueous organic solvent includes an ester-based solvent such as methyl acetate, ethyl acetate, γ-butyrolactone, and ε-caprolactone; an ether-based solvent such as dibutyl ether and tetrahydrofuran; a ketone-based solvent such as cyclohexanone; an aromatic hydrocarbon-based solvent such as benzene and fluorobenzene; a carbonate-based solvent such as dimethyl carbonate(DMC), diethyl carbonate(DEC), methyl ethyl carbonate(MEC), ethyl methyl carbonate(EMC), ethylene carbonate(EC), and propylene carbonate(PC); an alcohol-based solvent such as ethyl alcohol and isopropyl alcohol; nitriles such as R-CN (wherein R is a C2 to C20 linear, branched or cyclic hydrocarbon group, which may contain a double-bonded aromatic ring or an ether bond); amides such as dimethylformamide; dioxolanes such as 1,3-dioxolane; sulfolane, and the like.

Among the above examples, a carbonate-based solvent can be preferably used as the non-aqueous organic solvent.

In particular, considering the charge and discharge performance of the battery and compatibility with the sacrificial positive electrode material, the non-aqueous organic solvent may be preferably a mixture of a cyclic carbonate having high ionic conductivity and a high dielectric constant (e.g., ethylene carbonate and propylene carbonate) and a linear carbonate having low viscosity (e.g., ethyl methyl carbonate, dimethyl carbonate, and diethyl carbonate). In this case, mixing and using the cyclic carbonate and the linear carbonate at a volume ratio of 1:1 to 1:9 may be advantageous for achieving the above-mentioned performance.

In addition, as the non-aqueous organic solvent, a solvent in which ethylene carbonate(EC) and ethyl methyl carbonate(EMC) are mixed at a volume ratio of 1:2 to 1:10; or a solvent in which ethylene carbonate(EC), ethyl methyl carbonate(EMC) and dimethyl carbonate(DMC) are mixed in a volume ratio of 1~3:1~9:1 can be preferably used.

The lithium salt contained in the electrolyte is dissolved in the non-aqueous organic solvent and acts as a source of lithium ions in the battery, which enables basic operation of the lithium ion secondary battery and facilitates movement of lithium ions between the positive electrode and the negative electrode.

The lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiFSI, LiTFSI, LiCl, Lil, and LiB(C₂O₄)₂, and the like. Specifically, the lithium salt may be LiPF₆, LiFSI, LiTFSI, and a mixture thereof.

The lithium salt may be contained in the electrolyte at a concentration of 0.1 M to 2.0 M. The lithium salt contained in the concentration range imparts appropriate conductivity and viscosity to the electrolyte, thereby exhibiting excellent electrolyte performance.

Optionally, the electrolyte may contain additives for the purpose of improving battery life characteristics, suppressing decrease of capacity in the battery, improving battery discharge capacity, and the like.

For example, the additive may include a haloalkylene carbonate-based compound such as difluoroethylene carbonate; or pyridine, triethylphosphite, triethanolamine, cyclic ether, ethylene diamine, n-glyme, hexaphosphoric acid triamide, nitrobenzene derivative, sulfur, quinone imine dye, N-substituted oxazolidinone, N,N-substituted imidazolidine, ethylene glycol dialkyl ether, ammonium salt, pyrrole, 2-methoxy ethanol, aluminum trichloride, and the like. The additive may be contained in an amount of 0.1% by weight to 5% by weight with respect to the total weight of the electrolyte.

### [ADVANTAGEOUS EFFECTS]

According to the present disclosure, a manufacturing method that enables more efficient mass production of an electrode-integrated separator while minimizing the occurrence of defects is provided.

### [BRIEF DESCRIPTION OF THE DRAWINGS]

FIG. 1 is a cross-sectional view showing a state in which a laminate pattern 150 including a porous layer pattern 104 and an adhesive layer pattern 106 are formed on the carrier film 100 having the release layer 102 formed thereon.
FIG. 2 is a cross-sectional view of a state in which the electrode active material layer pattern 203 is formed on the metal substrate 200 for an electrode current collector.
FIG. 3 is a cross-sectional view of a state in which the carrier film 100 and the metal substrate 200 for an electrode current collector is laminated so that the adhesive layer pattern 106 and the electrode active material layer pattern 203 come into contact with each other.
FIG. 4 is a cross-sectional view of the state in which the release layer 102 and the carrier film 100 are removed from the state of FIG. 3.
FIG. 5 is a plan view schematically showing some steps included in the method for manufacturing an electrode-integrated separator for a lithium secondary battery according to an embodiment of the present disclosure.

### <Explanation of Symbols>

- 100:: carrier film
- 102:: release layer
- 104:: porous layer pattern
- 106:: adhesive layer pattern
- 150:: laminate pattern
- 200:: metal substrate for electrode current collector
- 203:: electrode active material layer pattern
- 500:: electrode-integrated separator for lithium secondary battery

### [DETAILED DESCRIPTION OF THE EMBODIMENTS]

Hereinafter, actions and effects of the invention will be described in more detail with reference to specific examples of the invention. However, this is presented as an example to aid in the understanding of the invention. The following examples are not intended to limit the scope of the invention in any way. It will be apparent to those skilled in the art that various changes and modifications can be made within the scope and spirit of the present disclosure.

### Example 1

### <Preparation of material>

1) A polyethylene terephthalate film (thickness: 125 *µ*m) was prepared as the carrier film 100. A UV curable coating composition containing urethane acrylate was prepared as a composition for forming the release layer 102.
2) To prepare a composition for forming the porous layer pattern 104, inorganic fine particles AlO(OH) and a dispersant (BYK, DISPERBYK-111) were mixed with N-methyl-2-pyrrolidone(NMP) to prepare an inorganic fine particle dispersion with a solid content of 39%. At this time, the particle size(D60) of the inorganic fine particles measured using a particle size analyzer was analyzed to be 550 nm. 8 wt.% of poly(vinylidene fluoride-co-hexafluoropropylene) and 6 wt.% of a dispersant (BYK, DISPERBYK-111) were dissolved in NMP to prepare a binder solution. The inorganic fine particle dispersion and the binder solution were uniformly mixed by using a homogenizer mixer to obtain a slurry.
3) A solution in which polyvinylidene fluoride was dissolved in NMP was prepared as a composition for forming the adhesive layer pattern 106.
4) A copper foil with a thickness of 10 *µ*m was prepared as a metal substrate 200 for an electrode current collector.
5) For forming the electrode active material layer pattern 203, an aqueous active material slurry was prepared including 95.1 wt.% of active material consisting of 85 wt.% of graphite active material in which artificial graphite and natural graphite were mixed in a ratio of 4:6, and 15 wt.% of SiO; 1.5 wt.% of acetylene black as a conductive material; 1.2 wt.% of carboxymethyl cellulose(CMC) and 2.2 wt.% of styrene butadiene rubber (SBR) as a binder.

### <Manufacture of electrode-integrated separator for lithium secondary battery>

The aqueous active material slurry was coated onto the metal substrate 200 for an electrode current collector to form an electrode active material layer pattern 203. The electrode active material layer pattern 203 was formed such a manner that electrode active material layer units with a width of 60 mm, a length of 100 mm, and a thickness of 85 *µ*m were continuously arranged at intervals of 20 mm.

On the other hand, the composition for forming a release layer pattern was coated onto the carrier film 100 to a thickness of 3 ,um to form a release layer 102 with a surface energy of 16 dyn/cm. The composition for forming a porous layer pattern was printed to a thickness of 20 *µ*m onto the release layer 102 using a gravure printing device to form a porous layer pattern 104. The porous layer pattern 104 was formed such a manner that porous layer units having a width of 65 mm and a height of 105 mm were continuously arranged at intervals of 10 mm. Then, the composition for forming an adhesive layer pattern was printed to a thickness of 4 *µ*m onto the porous layer pattern 104 using a gravure printing device to form an adhesive layer pattern 106.

Using the aligning means of the alignment laminating device, the lamination position of the electrode active material layer pattern 203 that was visually confirmed through the carrier film 100 having the release layer 102 formed thereon and the laminate pattern 150 was confirmed. The lamination position was adjusted so that the center of the adhesive layer unit coincides with the center of the electrode active material layer unit. Next, the carrier film 100 and the metal substrate 200 for the electrode current collector were laminated using an alignment laminating device so that the adhesive layer pattern 106 and the electrode active material layer pattern 203 come into contact with each other.

The laminate in a state laminated as described above was passed through a roll laminator at 95°C and a pressure of 13 kgf, so that the porous layer pattern 104 and the adhesive layer pattern 106 were transferred onto the electrode active material layer pattern 203. Next, the carrier film 100 on which the release layer 102 was formed was removed to prepare an electrode-integrated separator 500 for a lithium secondary battery.

### Example 2

An electrode-integrated separator for a lithium secondary battery was manufactured in the same manner as in Example 1, except that the composition of the UV curable coating composition was changed to form a release layer 102 with a surface energy of 20 dyn/cm.

### Comparative Example 1

The water-based active material slurry similar to that of Example 1 was coated onto the entire surface of an electrode current collector, which was a copper foil with a thickness of 10 *µ*m to form an electrode active material layer with a thickness of 85 *µ*m. The composition for forming a porous layer pattern similar to that of Example 1 was coated onto the electrode active material layer to form a porous layer with a thickness of 20 *µ*m. Thereby, an electrode-integrated separator for a lithium secondary battery was manufactured.

### Experiment Example

### (1) Surface energy of release layer (dyn/cm)

Using a contact angle measuring device (DSA100 Drop Shape Analyzer, KRUSS Co.), a drop was formed on the release layer 102 with distilled water and diiodomethane, respectively, and the contact angle was measured. The surface energy of the release layer was calculated from the contact angle value.

### (2) Light transmittance (%)

Using a UV-VIS-NIR Spectrophotometer (SolidSpec-3700, SHIMADZU Co.), the total light transmittance of the carrier film 100 on which the release layer 102, the porous layer pattern 104, and the adhesive layer pattern 106 were sequentially formed was measured, and the light transmittance values for visible light with a wavelength of 550 nm are shown in Table 1 below.

### (3) Transfer and mold releasability

In the process of transferring the porous layer pattern 104 and the adhesive layer pattern 106 according to the previous Examples onto the electrode active material layer pattern 203 and removing the carrier film 100 on which the release layer 102 was formed therefrom, the transfer state and mold releasability were evaluated as good or poor, and are shown in Table 1 below.

### (4) Appearance characteristics

In the electrode-integrated separator for a lithium secondary battery according to Examples and Comparative Examples, the appearance of the porous layer pattern or the porous layer was evaluated as good or poor (occurrence of pinholes), and is shown in Table 1 below.

### (5) Insulation characteristics

In the electrode-integrated separator for a lithium secondary battery according to Examples and Comparative Examples, the insulation resistance between the metal substrate for the electrode current collector and the porous layer pattern or between the electrode current collector and the porous layer was measured, and evaluated as good or bad (short circuit), and shown in Table 1 below.

**[Table 1]**

| | Light transmittance | Transfer and mold releasability | Appearance characteristics | Insulation characteristics |
|---|---|---|---|---|
| Example 1 | 50 | Good | Good | Good |
| Example 2 | 49 | Good | Good | Good |
| Comparative Example 1 | - | - | Poor | Poor |

Referring to Table 1, it was confirmed that in Examples, an electrode-integrated separator for a lithium secondary battery can be manufactured more efficiently while minimizing the occurrence of defects.

While the present invention has been described in detail with reference to specific embodiments and illustrative drawings, the present invention is not limited thereto, and it will be apparent to those skilled in the art that various changes and modifications can be made within the spirit and scope of the disclosure as defined by the appended claims.

## Claims

1. A method for manufacturing an electrode-integrated separator for a lithium secondary battery, the method comprising the steps of:
providing a carrier film 100 having a release layer 102 formed thereon;
forming a laminate pattern 150 including a porous layer pattern 104 and an adhesive layer pattern 106 which are sequentially stacked on the release layer 102 of the carrier film 100;
forming an electrode active material layer pattern 203 on a metal substrate 200 for an electrode current collector;
laminating the carrier film 100 and the metal substrate 200 for an electrode current collector so that the adhesive layer pattern 106 and the electrode active material layer pattern 203 come into contact with each other; and
transferring the porous layer pattern 104 and the adhesive layer pattern 106 onto the electrode active material layer pattern 203, and removing the carrier film 100 having the release layer 102 formed thereon.

2. The method for manufacturing an electrode-integrated separator for a lithium secondary battery according to claim 1, wherein:
the laminating step is performed in a manner that laminates,
a carrier film 100 in which two or more laminate patterns 150 including a porous layer pattern 104 and an adhesive layer pattern 106 are formed on the release layer 102, and
a metal substrate 200 for an electrode current collector having two or more electrode active material layer patterns 203 formed thereon,
under a condition where the center of the adhesive layer unit forming the adhesive layer pattern 106 and the center of the electrode active material layer unit forming the electrode active material layer pattern 203 coincide with each other.

3. The method for manufacturing an electrode-integrated separator for a lithium secondary battery according to claim 1, wherein:
before the laminating step, the method further comprises confirming the lamination position of the electrode active material layer pattern 203, which is visually confirmed through the carrier film 100 having the release layer 102 formed thereon and the laminate pattern 150.

4. The method for manufacturing an electrode-integrated separator for a lithium secondary battery according to claim 1, wherein:
the carrier film 100 having the release layer 102 formed thereon and the laminate pattern 150 each have a light transmittance of 40% or more to visible light with a wavelength of 550 nm.

5. The method for manufacturing an electrode-integrated separator for a lithium secondary battery according to claim 1, wherein:
the release layer 102 has a surface energy of 15 dyn/cm to 30 dyn/cm.

6. The method for manufacturing an electrode-integrated separator for a lithium secondary battery according to claim 1, wherein:
the porous layer pattern 104 includes a polymer binder and inorganic fine particles dispersed in the polymer binder.

7. The method for manufacturing an electrode-integrated separator for a lithium secondary battery according to claim 6, wherein:
the porous layer pattern 104 includes 10 to 99% by weight of the inorganic fine particles and 1 to 90% by weight of the polymer binder.

8. The method for manufacturing an electrode-integrated separator for a lithium secondary battery according to claim 6, wherein:
the polymer binder is at least one compound selected from the group consisting of polyvinylidene fluoride, poly(vinylidene fluoride-hexafluoropropylene), poly(vinylidene fluoride-trichloroethylene), poly(vinylidene fluoride-chlorotrifluoroethylene), polymethyl methacrylate, polyacrylonitrile, polyvinylpyrrolidone, polyvinyl acetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethyl cellulose, acrylonitrile-styrene-butadiene copolymer, ethylene-propylene-diene terpolymer, sulfonated ethylene-propylene-diene terpolymer, styrene butadiene rubber, fluororubber, and polyimide.

9. The method for manufacturing an electrode-integrated separator for a lithium secondary battery according to claim 6, wherein:
the inorganic fine particles are at least one selected from the group consisting of SrTiOs, SnO₂, CeO₂, MgO, NiO, CaO, ZnO, ZrO₂, Y₂O₃, Al₂O₃, boehmite(AlO(OH)), Al(OH)₃, TiO₂, SiC, BaTiO₃, Pb(Zr,Ti)O₃, Pb₁₋ₓLaₓZr_{1-y}Ti_{y}O₃, Pb(Mg_{1/3}Nb_{2/3})O₃-PbTiO₃, HfO₂, Li₃PO₄, LiₓTi_{y}(PO₄)₃ (0<x<2, 0<y<3), LiₓAl_{y}Ti_{z}(PO₄)₃ (0<x< 2, 0<y<1, 0<z<3), (LiAlTiP)ₓO_{y} (0<x<4, 0<y<13), LiₓLa_{y}TiO₃ (0<x<2, 0<y<3), LiₓGe_{y}P_{z}S_{w} (0<x<4, 0<y<1, 0<z<1, 0<w<5), LiₓN_{y} (0<x<4, 0<y<2), LiₓSi_{y}S_{z} (0<x<3, 0<y<2, 0<z< 4), and LiₓP_{y}S_{z} (0<x<3, 0<y<3, 0<z<7).

10. The method for manufacturing an electrode-integrated separator for a lithium secondary battery according to claim 6, wherein:
the inorganic fine particles have a particle size of 0.001 µm to 10 µm.

11. The method for manufacturing an electrode-integrated separator for a lithium secondary battery according to claim 1, wherein:
the adhesive layer pattern 106 includes at least one compound selected from the group consisting of polyvinylidene fluoride, poly(vinylidene fluoride-hexafluoropropylene), poly(vinylidene fluoride-trichloroethylene), poly(vinylidene fluoride-chlorotrifluoroethylene), polymethyl methacrylate, polyacrylonitrile, polyvinylpyrrolidone, polyvinylacetate, ethylene vinyl acetate copolymer, polyethylene oxide, cellulose acetate, cellulose acetate butyrate, cellulose acetate propionate, cyanoethyl pullulan, cyanoethylated polyvinyl alcohol, cyanoethyl cellulose, cyanoethyl sucrose, pullulan, carboxymethylcellulose, acrylonitrile-styrene-butadiene copolymer, ethylene-propylene-diene terpolymer, sulfonated ethylene-propylene-diene terpolymer, styrene butadiene rubber, fluororubber, and polyimide.

12. The method for manufacturing an electrode-integrated separator for a lithium secondary battery according to claim 1, wherein:
the step of transferring the porous layer pattern 104 and the adhesive layer pattern 106 onto the electrode active material layer pattern 203 is carried out under heating and pressing.
